(19) **Europäisches Patentamt European Patent Office Office européen des brevets**

(11) **EP 3 972 943 B1**

(12) **EUROPEAN PATENT SPECIFICATION**

(45) Date of publication and mention
of the grant of the patent:
**03.01.2024 Bulletin 2024/01**

(21) Application number: **20726337.7**

(22) Date of filing: **12.05.2020**

(51) International Patent Classification (IPC):
*C03C 17/36* (2006.01)    *C03C 17/42* (2006.01)

(52) Cooperative Patent Classification (CPC):
**C03C 17/34; C03C 17/42**

(86) International application number:
**PCT/EP2020/063150**

(87) International publication number:
**WO 2020/234040 (26.11.2020 Gazette 2020/48)**

(54) **COATED SUBSTRATE**

BESCHICHTETES SUBSTRAT

SUBSTRAT REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2019 EP 19175372**
**14.02.2020 EP 20157402**

(43) Date of publication of application:
**30.03.2022 Bulletin 2022/13**

(73) Proprietors:
• **AGC Glass Europe**
**1348 Louvain-La-Neuve (BE)**
• **AGC Inc.**
**Tokyo 100-8405 (JP)**
• **AGC Flat Glass North America, Inc.**
**Alpharetta, GA 30022-1167 (US)**
• **AGC Vidros do Brasil Ltda**
**CEP 12523-671 Guaratinguetá São Paulo (BR)**

(72) Inventors:
• **PIERRE, David**
**6041 Gosselies (BE)**
• **BOSGAERD, Eric**
**1474 Ways (BE)**
• **MORAY, Thierry**
**6041 Gosselies (BE)**

(74) Representative: **AGC Glass Europe Technovation Centre Intellectual Property Department Rue Louis Blériot 12 6041 Gosselies (BE)**

(56) References cited:
**EP-A2- 0 262 414    US-A1- 2016 194 516**

**Description**

**Technical field of the invention**

The invention relates to a coated substrate provided with a soft coating such as a solar control and/or an insulating low-E coating with an increased mechanical, chemical and corrosion resistance thanks to the presence above the soft coating of a protective coating obtained by the application and curing of a radiation curable composition comprising one or more compound bearing one or more cyclic ether CEC. The invention also relates to the process for making such a coated substrate and to a process wherein a glass coated substrate further undergoes a heat treatment. The use of a protective coating based on radiation curable composition comprising one or more compound bearing one or more cyclic ether CEC composition to protect a coated substrate provided with a soft coating is also provided.

**Background of the invention**

A large part of soft coatings such as solar control or insulating low-E coatings present a low emissivity and are used in glazing for their IR reflecting ability, allowing a precise energy control of the glazing, thereby reducing heat loss and/or avoiding over-heating of a glazed structure. Unfortunately, the limited mechanical, chemical and corrosion resistance of most soft coatings limits their use. Indeed, such coatings can be easily damaged by exposure to the environment during their production or during their lifetime. Mechanical actions such as contact or friction with other materials or objects can result in scratches or mars. The chemical environment (humidity, temperature...) or contact with chemicals like detergent or everyday life products leads to a degradation of the soft coating surface. The result of such deteriorations could be both aesthetic and functional. This is particularly true for soft coatings that rely on metal-based infrared reflecting layers. Even if some soft coatings, without metal-based infrared reflecting layers can be used on exterior faces of glazing, their durability does not reach that of hard coatings produced by chemical vapor deposition (CVD). During the production of coatings on substrates like glass or polymer sheets, the coated sheets are often scratched due to one or more of: (a) rubbing up against other sheets or the like during shipment; (b) pliers used by glass handlers during and/or proximate cutting or edge seaming steps; (c) abrasion caused by gloves worn by glass handlers; (d) brushes during washing step; and (e) other types of rubbing/abrasion caused during any step at fabricator premises. Additionally, corrosion is also a significant cause of damage of glass sheets and is often caused by high humidity conditions, acid rain, and/or other materials which tend to collect on the coated articles during transport, storage and/or handling.
For glass sheets, while the aforesaid types of damage often occur prior to heat treatment (e.g., tempering), the tempering magnifies such damages. For example, a minor bit of corrosion which was caused pre-tempering can lead to a significant blemish upon heat treatment which causes the coated sheet to be scrapped.
Many applications or markets are demanding soft coatings, particularly solar control or insulating low-E coatings for their opto-energetic properties and their ability to block a portion of the IR spectrum.
A known method to obtain a glazing with a protected soft coating is to make use of energy saving window films such as those commercialized by Nitto under the names Penjerex® PX-7060S or Penjerex® PX-8080. These adhesive films contain a low-E coating protected by a polyester film. However, for durability reasons, such films can only be used on the face of the glazing in contact with the interior of a building, they are not heat treatable and oblige the windows maker or the end user to install them on site.
Another method is the formation of a protective coating from a polymer water based or solvent based system. However, it requires heat and time to evaporate the water or solvent, and exhausters, burners or gas evacuation is needed. This generates extra production costs and potential degradation of the soft coating due to water or solvent ingress.
Application WO 00/50354 discloses for example films obtained from aqueous solutions of acrylic polymers that can easily be removed with water, since the polymer is itself water soluble. Application WO 01/02496 discloses a coating intended to temporarily protect a substrate during a transport, handling or storage step, by application of a removable protective coating. The coating may be a film obtained from aqueous solutions of polymers not based on the radiation curable cyclic ether chemistry. The protective coating is preferably removed by aqueous washing. According to one embodiment that is not preferred, this coating may also be removed by thermal decomposition or combustion.
Such temporary protective layers that can be removed by aqueous washing are furthermore not capable of protecting the substrate against corrosion during storage and do not protect the functional coating during washing phases. Furthermore, they additionally have the drawback of giving rise to liquid wastes that have to be treated and to a pollution of the washing machine of the processing company.
US 2018/0355659 A1 describes a solvent based solution where a protective film is applied from a solution of SBS copolymer, with the need of solvent removal.
US 2006/0065350 A1 describes the use of a high molecular weight thermoplastic that has to be removed before heat treatment. This method also generates abundant wastes.
Deposition of a protective layer on a functional coating is also disclosed in US20160194516. This protective layer is based on the (meth)acrylates chemistry, not on the radiation curable cyclic ether chemistry.

EP0262414 pertains to compositions which are curable with ultraviolet light, using photo-initiators which form cationic species initiating the polymerization.

There is therefore a need to protect the substrates bearing a soft coating during the production, processing, transport and storage steps.

There is a need for a durable protection to improve durably the resistance both against physical impairments and against corrosion in a wet environment or during a washing step. There is also a need to obtain this protection in an environmental friendly way.

**Summary of the invention**

Against this background, we now provide a coated substrate comprising :

- a substrate comprising two main faces separated by edges, a soft coating comprising one or more layers deposited by physical vapor deposition provided on at least a part of at least one main face of the substrate,
- a protective coating provided on at least a part of said face above the soft coating,
- optionally at least one intermediate coating provided on at least a part of said face between the soft coating and the protective coating,

wherein,

the protective coating is a radiation cured coating obtained by curing a radiation curable composition comprising one or more compound bearing one or more cyclic ether CEC,
and with the proviso that when the optional at least one intermediate coating is a sol-gel coating, the sol-gel coating comprises from 0 to 1.59 wt% of cerium on the total weight of metal, metalloid and lanthanide elements of the sol-gel coating.

The coated substrate of the invention presents in at least one of its embodiments one or more of the following advantages:
The coated substrate of the invention bearing the protective coating is advantageous in that the protective coating provides mechanical, chemical and corrosion resistance to the soft coating.

The coated substrate of the invention bearing the protective coating is advantageous in that the soft coating is protected against mechanical, chemical and corrosion actions during the production, processing, transport and storage steps, until it is provided to the end user.

The coated substrate of the invention is advantageous in that the protective coating is obtained from a radiation curable composition with a reduced solvent or water content or which is even solvent or water free.

The coated substrate of the invention bearing the protective coating is advantageous in that the protective coating is not water soluble or hydrolysis sensitive and is hence effective in the protection against corrosion.

The coated substrate of the invention bearing the protective coating is advantageous in that the protective coating is removable by heat treatment and has not to be dissolved in a solvent or water before said heat treatment.

The coated substrate of the invention bearing the protective coating is advantageous in that the protective coating is removable by heat treatment without damaging the properties of the soft coating such as the optical, energy or thermal properties.

The present invention also provides a process for making a coated substrate.

The process according to the invention presents in at least one of its embodiments one or more of the following advantages:
The process of the invention making use of the radiation curing technology has an improved efficiency and an improved productivity in comparison to other standard types of technologies such as those based on solvent or water based compositions, thermal curing compositions, 2 components compositions.

The process of the invention making use of a radiation curable composition having reduced amounts or no solvent or water requires less or no energy to remove the solvent or water and devices to dry, recover and treat the vapors can be avoided as well as emissions to the environment.

The radiation curing technology used in the process of the invention can be installed on existing production lines as it requires few floor space.

The process of the invention allows the removal of the protective coating by heat treatment without damaging the properties of the soft coating such as the optical, energy or thermal properties.

The process of the invention allows reducing the use of solvents or water both by the use of radiation curable compositions comprising less or no solvent or water and by the fact that the protective coating has not to be removed by dissolution in a solvent or water before heat treatment.

## Detailed description of the invention

In a first aspect of the invention, there is provided a coated substrate comprising :

- a substrate comprising two main faces separated by edges,
- a soft coating comprising one or more layers deposited by physical vapor deposition provided on at least a part of at least one main face of the substrate,
- a protective coating provided on at least a part of said face above the soft coating,
- optionally at least one intermediate coating provided on at least a part of said face between the soft coating and the protective coating,

wherein,

the protective coating is a radiation cured coating obtained by curing a radiation curable composition comprising one or more compound bearing one or more cyclic ether CEC,

and with the proviso that when the optional at least one intermediate coating is a sol-gel coating, the sol-gel coating comprises from 0 to 1.59 wt% of cerium on the total weight of metal, metalloid and lanthanide elements of the sol-gel coating.

The substrate according to the invention is a substrate having two main faces separated by edges. It can be any substrate type such as for instance glass, glass-ceramic, ceramic, steel, metal and transparent polymers such as polycarbonate (PC), polyethylene terephthalate (PET), polystyrene (PS), polyvinyl chloride (PVC), polymethyl methacrylate (PMMA). The substrate according to the invention may be flat or curved/bent. Suitable substrates according to the invention preferably can withstand a heat treatment at at least 300°C, preferably at at least 400°C. The substrate is preferably glass, glass-ceramic, ceramic, steel, metal. It is more preferably a glass substrate, most preferably a glass sheet. According to an embodiment, the glass sheet is a float glass sheet. The term "float glass sheet" is understood to mean a glass sheet formed by the float method, which consists in pouring the molten glass onto a bath of molten tin, under reducing conditions. A float glass sheet comprises, in a known way, a "air face" and a "tin face", the last one being a face enriched in tin in the body of the glass close to the surface of the sheet. The term "enrichment in tin" is understood to mean an increase in the concentration of tin with respect to the composition of the glass at the core, which may or may not be substantially zero (devoid of tin). Therefore, a float glass sheet can be easily distinguished from sheets obtained by other glassmaking methods, in particular by the tin oxide content which may be measured, for example, by electronic microprobe to a depth of ~ 10 microns. In many cases and as illustration, this content lies between 1 and 5 wt%, integrated over the first 10 microns starting from the surface.

Alternatively, according to another embodiment, the glass sheet is a cast or drawn glass sheet.

The glass sheet according to the invention is made of glass whose matrix composition is not particularly limited and may thus belong to different categories. The glass may be a soda-lime-silicate glass, an aluminosilicate glass, an alkali-free glass, a boro-silicate glass, etc. It may be a clear, extra-clear/low-iron or colored glass sheet. Preferably, the glass sheet of the invention is made of a soda-lime glass or an aluminosilicate glass. Non-limiting examples of glass sheets are Planibel® Clear, Linea Azzura®, Dragontrail®, Tirex®, Falcon®, Clearvision®, Clearlite®.

The glass sheet of the invention can be of any desired dimensions, such as length, width, shape and/or thickness. The glass sheet of the invention may have a thickness of from 0.1 to 25 mm.

For the purpose of the present invention a soft coating is a coating comprising one or more layers deposited by physical vapor deposition (PVD) in particular by magnetron sputtering. In particular, a soft coating may comprise one or more metal based infrared reflecting layers that are typically surrounded by two or more dielectric layers. The metal based infrared reflecting layer is most often based on silver but may also be based on metals such as for example nickel, chromium, niobium, tungsten, zirconium, titanium stainless steel or mixtures thereof. The dielectric layers may comprise one or more metal oxides or metal nitrides or metal oxynitrides or metal carbides or diamond-like carbon layers. In a typical embodiment of the present invention the soft coating comprises p functional layer(s) reflecting infrared radiation and p+1 dielectric layers, with $p \geq 1$, each functional layer being surrounded by dielectric layers. In certain embodiments, a soft coating may also be a coating deposited by physical vapor deposition (PVD) in particular by magnetron sputtering which is devoid of any metallic layer and comprise only one or more layers of one or more metal oxides or metal nitrides or metal oxynitrides or metal carbides or diamond-like carbon or transparent conductive oxides.

Soft coatings produced by PVD, in particular comprising metallic functional layers, have generally a limited mechanical, chemical and corrosion resistance hence limiting their resistance during manipulation, transportation and storage.

The soft coating may in particular be a solar control and/or insulating low-E coating. For example, and without limitation, such solar control or insulating low-E coatings may be single silver, double silver or triple silver coating stacks, or any of the soft coatings in any of the following WO2005012200, WO2006122900, WO2007138097, WO2011147875, WO2011147864, WO2013079400, WO2014191472, WO2014191474, WO2014191484, all of which are hereby incorporated by reference.

Suitable soft coatings in the frame of the present invention are for instance Sunlux or Stopsol commercialized by Asahi Glass Company. Examples of solar control or insulating low-E coating suitable for the invention are Silver Smart (such as 30/51/69), Silverflex, Energylight, Planibel AS, Sunlux, ipasol, iplus Top (such as 1.1, 1.0 and their temperable version), Stopray Smart, Stopray (Vision 50, 60, 72, 61, 51, 52, 41, and 40 and ultra 50 and 60 and their temperable version), Energy N and its temperable version, Stopray ACE (30, 40, 42 and their temperable version) also commercialized by Asahi Glass Company.

In certain embodiments of the present invention, the soft coating is heat treatable. By heat treatable is meant that it is suitable to undergo a heat treatment such as bending (also known as curving), annealing (also known as strengthening) or tempering process without significant deterioration of its optical, energy and thermal properties. Such heat treatment typically takes place at at least 300°C, preferably at least 400°C. It is advantageous as more and more heat treated glass is requested in buildings and automotive applications namely for safety purposes. The heat treatment is known to the skilled person and is performed according to known methods as will be developed in more details later. Examples of heat treatable soft coatings are Sunlux, Stopsol, Silver Smart (such as 30/51/69), Silverflex, Energylight, Planibel AS , iplus Top (such as 1.1T, 1.0T), Stopray (Vision 50T, 51T, 52T,_60T, 72T, 61T, 41T, and 40T and ultra 50T and 60T), Energy NT, Stopray ACE (30T, 40T, 42T). A heat treatable soft coating is of particular interest when the substrate can withstand the temperature ranges of the heat treatment without major alteration. In that case, the substrate is preferably glass, glass-ceramic, ceramic, steel, metal. It is more preferably a glass substrate, most preferably a glass sheet, which typically are intended to be heat treated.

The soft coating of the invention is provided on at least a part of at least one main face of the substrate. It can be provided on a part of said face or substantially on the entire said face. By substantially on an entire entity (here the face) is meant that at least 90% of the entity is covered, preferably at least 95%, more preferably at least 97%, most preferably 100% of the entity is covered. The soft coating can be provided on anyone of the main faces of the substrate or on both faces. The soft coating may further be provided on anyone of the edges of the substrate or on several ones or all of them. The soft coating may also be deposited on each of the main faces of the substrate and on each of the edges of the substrate, i.e. on the entire area of the substrate. The soft coating is preferably provided substantially on one entire main face of the substrate. It has to be noted that the soft coating may be partially removed or de-coated depending on the needs. It is for instance the case for the so called edge deleted glass sheet where the soft coating is removed on the periphery of the face of the coated glass sheet. The coating removal or de-coating may also be applied on other parts of the face depending on the needs.

The coated substrate further comprises a protective coating aiming at protecting the soft coating from mechanical, chemical and corrosion actions. The protective coating is provided on at least a part of the face of the substrate provided with the soft coating and above the soft coating. It preferably covers the entire soft coating or substantially the entire face of the substrate. The protective coating can be provided on anyone of the main faces of the substrate or on both faces. The protective coating may further be provided on anyone of the edges of the substrate or on several ones or all of them. The protective coating may also be deposited on each of the main faces of the substrate and on each of the edges of the substrate, i.e. on the entire area of the substrate. The protective coating is preferably provided substantially on one entire main face of the substrate bearing the soft coating.

The protective coating of the invention is a radiation cured coating obtained by curing a radiation curable composition comprising one or more compound bearing one or more cyclic ether. The compounds bearing one or more cyclic ether will herein also be referred to as CEC.

A radiation curable composition is a composition that is suitable to undergo curing upon exposure to actinic radiations or electron beam. Actinic radiations comprise visible light, ultraviolet radiations, gamma-rays, X-rays. By curing, also known as crosslinking, is meant the formation of a network of polymer chains upon exposure of the radiation curable composition to actinic radiations or electron beam. The radiation cured coating is obtained by the curing of the radiation curable composition preferably by ultraviolet radiations or electron beam, more preferably by ultraviolet radiations. When the radiation curable composition is not free of solvent or water, the curing also encompasses the drying of the solvent or water.

The radiation curable composition comprises one or more compound bearing one or more cyclic ether (CEC). The cyclic ether is preferably a cyclic ether comprising from 2 to 6 carbon atoms in the cycle, more preferably 2 to 5, most preferably 2 to 4 and even more preferably 2 to 3. Cyclic ethers comprising 2 carbon atoms in the cycle are known as oxiranes or epoxides and cyclic ethers comprising 3 carbon atoms in the cycle are known as oxetanes. The CEC used according to the invention may also comprise more than one cyclic ether. The CEC may also comprise one or more functional group different from a cyclic ether group.

Non exhaustive examples of CEC suitable in the present invention are cycloaliphatic epoxides with one or more epoxide group, compounds comprising one or more glycidyl ether group, compounds comprising one or more glycidyl ester group, oxetanes and the like. Any mixture of these can also be used.

Some examples of cycloaliphatic epoxides are 7-oxabicyclo(4.1.0)hept-3-ylmethyl 7-oxabicyclo(4.1.0)heptane-3-carboxylate (commercialized by Lambson under the name Uvicure S105), bis((3,4-epoxycyclohexyl)methyl) adipate (commercialized by Lambson under the name Uvicure S128) .

Some examples of compounds comprising one or more glycidyl ether group are diglycidylether of hydrogenated bisphenol-A, diglycidylether of bisphenol-A, trimethylolpropan di- or tri-glycidylether.

Some examples of oxetanes are 3-ethyloxetane-3-methanol (commercialized by Lambson under the name Uvicure S130), 3-ethyl-3-[(phenylmethoxy)methyl]-oxetane (commercialized by Lambson under the name Uvicure S140), 1,4-Bis[(3-ethyl-3-oxetanylmethoxy)methyl]benzene (commercialized by Lambson under the name Uvicure S150), 4,4-Bis[(3-ethyl-3-oxetanyl)methoxymethyl]biphenyl (commercialized by Lambson under the name Uvicure S160).

Any mixture of those CEC can be used. Generally, a mixture of several CEC is used, which are selected depending on the needs such as for instance the desired viscosity of the radiation curable composition and the desired properties of the radiation cured coating.

In some instances, a mixture of CEC comprising at least one CEC comprising at least one aromatic group may be used. Such a CEC comprising at least one aromatic group may indeed provide the protective coating with a further advantage in terms of resistance against humidity. These compounds will be called aromatic functional CEC.

Examples of such aromatic functional CEC include, diglycidylether of bisphenol-A (BADGE), diglycidylether of bisphenol-F (BFDGE), 1,4-Bis[(3-ethyl-3-oxetanylmethoxy)methyl]benzene, 4,4-Bis[(3-ethyl-3-oxetanyl)methoxy methyl] biphenyl, tetraglycidyl ether of tetrakis(4-hydroxyphenyl) ethane, triglycidyl ether of tris(hydroxyphenyl)methane, bis(2,3-epoxypropyl) phthalate.

The radiation curable composition preferably comprises at least 5 wt% of one or more CEC relative to the weight of the dry content of the composition. The radiation curable composition more preferably comprises at least 10 wt% of one or more CEC, even more preferably at least 25 wt% and most preferably at least 50 wt%. By dry content is meant the content of the radiation curable composition exempt of solvent and/or water. A solvent is here considered as an organic compound able to solubilize the radiation curable composition constituents and which is removed from the coating after curing. The dry content is determined by calculation based on the weight of the constituents of the radiation curable composition.

In the presence of one or more aromatic functional CEC, the radiation curable composition comprises at least 3 wt% of such one or more aromatic functional CEC, preferably at least 5 wt%, more preferably at least 7 wt%, relative to the weight of the dry content of the composition. In the presence of one or more aromatic functional CEC, the radiation curable composition comprises at most 25 wt% of such one or more aromatic functional CEC, preferably at most 20 wt%, preferably at most 18 wt%, relative to the weight of the dry content of the composition. In the presence of one or more aromatic functional CEC, the ratio of the total amount of aromatic functional CEC on the total amount of aliphatic CEC in the radiation curable composition may range of from 0.01 to 0.60. Below this value, the water resistance improvement is not significant and above this value the corrosion resistance is no longer guaranteed. Further, a too high amount of aromatic functional CEC may ultimately provide for undesired residues upon tempering. The increase in ratio is indicative of the increase of the water resistance of the protective coating obtained from the radiation curable composition. Alternatively, the ratio may range of from 0.02 to 0.50, alternatively of from 0.02 to 0.25.

As known by the skilled person, cyclic ether groups are radiation cured by cationic polymerization in the presence of a cationic initiator. A cationic initiator in the sense of the present invention is an initiator forming cationic species upon exposure to actinic radiations or electron beam. In the present invention, the cationic initiators are not considered as additives.

Numerous families of compounds are known as cationic initiators. Amongst others, mention may be made of aromatic diazonium salts of complex halides, complex salts of aromatic iodonium, complex salts of aromatic sulfonium.

A few examples of them are Bis(4-dodecylphenyl) iodonium hexa-fluoro-antimonate (commercialized by Lambson under the name Speedcure 937), (sulfanediyldibenzene-4.1-diyl) bis(diphenyl sulfonium) bis(hexafluoroantimonate (commercialized by Lambson under the name Speedcure 976), (4-(4-diphenyl-sulfanylium)-phenyl)-sulfanyl)phenyl)diphenyl Sulfonium bis-hexa-fluoro-phosphate in propylene carbonate (commercialized by Lambson under the name Speedcure 992) .

In the present invention, the radiation curable composition comprises at least one cationic initiator. The total amount of cationic initiator on the weight of the dry content of the radiation curable composition ranges from 0.1 to 15 wt%. This amount is preferably at least 0.5 wt%, more preferably at least 1 wt%, most preferably at least 2 wt%, it is preferably at most 10 wt%.

The radiation curable composition may optionally comprise additional compounds. Non exhaustive examples of which are polyols, alkyds, caprolactones, vinyl ethers, additives and any mixtures thereof.

Any additive known to the skilled person may be added to the radiation curable composition depending on the needs. Example of such additives are wetting agents, levelling agents, adhesion promoters, slip aids, plasticizers, stabilizers, defoamers, flow agents, fillers, dyes and mixtures thereof.

Non limiting examples of flow agents include silicone-based polymers such as silicone polyethers (for example, Dowsil® 205 SL, commercialized by Dow), acrylic-based polymers such as polyacrylates (for example, Resiflow FL 2, commercialized by Worlée), fluorine-based polymers such as fluorochemical surfactants (commercialized by Uniqchem), and mixtures thereof.

In a particular embodiment of the present invention, the radiation curable composition comprises at least one polyol. By polyol is meant an organic compounds bearing two or more alcohol groups.

Non exhaustive examples of polyols are ethylene glycol, propylene glycol, 1,3- propanediol, 1,3-butanediol, 1,4-butanediol, 1,5-pentanediol, 1,6-hexanediol, 1,7-heptanediol, 1,8- octanediol, neopentyl glycol, diethylene glycol, dipropylene glycol, triethylene glycol, tetraethylene glycol, dibutylene glycol, 2-methyl-1,3-pentanediol, 2-ethyl-2-butyl-1,3-propanediol, 2-ethyl-1,6- hexanediol, 2,2,4-trimethyl-1,3-pentanediol, 1,4-cyclohexanedimethanol, ethylene oxide adducts or propylene oxide adducts of bisphenol A or hydrogenated bisphenol A. Other suitable polyols are glycerol, trimethylolethane, trimethylolpropane, di-trimethylolethane, di- trimethylolpropane and pentaerythritol and/or di-pentaerythritol. Polymeric polyols such as polyester polyols, polyether polyols, polycarbonate polyols, and the like may also be used. Any mixtures of these polyols may be used.

The total polyol content ranges from 0 to 40 wt% of the weight of the dry content of the composition. The total polyol content preferably is at most 30 wt%, more preferably at most 20 wt%, most preferably at most 10 wt%.

The polyol will decrease the viscosity of the radiation curable composition. Depending on its nature, the polyol may advantageously increase the crosslinking density of the cured coating, improve its water repellency, increase its flexibility.

In another particular embodiment of the present invention, the radiation curable composition comprises at least one alkyd. Alkyds are known to the skilled person. Alkyds are typically polymers, generally polyesters, containing fatty acid residues. Generally, the fatty acid residues are residue of long chain saturated or unsaturated carboxylic acids with 12 to 20 carbon atoms in the chain.

A few examples of commercial alkyds are the Worléekyd range commercialized by Worlée (Worléekyd B865, R6048, L7904, RL1290), NEBORES® A 39-75 BA commercialized by Necarbo, Uradill™ AZ760 commercialized by DSM. Any mixture of those alkyds can be used.

The total alkyd content ranges from 0 to 30 wt% of the weight of the dry content of the composition. The total alkyd content preferably is at most 20 wt%, more preferably at most 10 wt%, most preferably at most 5 wt%.

In yet another particular embodiment of the present invention, the radiation curable composition comprises both at least one polyol and at least one alkyd.

The radiation curable composition of the invention is preferably substantially free of solvent or water. By substantially free is meant that the composition comprises a total amount of at most 1 wt% of solvent and/or water on the total weight of the composition, preferably at most 0.1 wt%. Even if not preferred, the radiation curable composition may comprise solvent or water. It can for instance be the case in order to adjust the viscosity of the composition so that it is suitable for application on the substrate. If solvent and/or water is present, it is in a total amount of at most 40 wt% on the total weight of the composition, preferably at most 30 wt%, most preferably at most 20 wt%, even more preferably at most 10 wt% and even at most 5 wt%.

The constituents of the radiation curable composition and their respective amounts are defined depending on the needs such as for instance the desired viscosity of the radiation curable composition and the desired properties of the radiation cured coating.

Radiation curable compositions have several advantages. In comparison to other standard types of compositions such as solvent or water based compositions, thermal curing compositions, 2 components compositions, they provide a more efficient process and an improved productivity. Indeed radiation curing can be performed at room temperature and is fast. In consequence, it requires less energy consumption, it decreases the cycle time and increases the throughput. It is furthermore a technology that can be installed on existing production lines as it requires few floor space.

In comparison to solvent or water based compositions of the art, the radiation curable composition of the invention can advantageously be a solvent and/or water free composition. Indeed, the composition of the invention is liquid at room temperature even in the absence of solvent and/or water and may be applied on the substrate as such. It is particularly advantageous as it requires less or no energy to remove the solvent or water, and devices to dry, recover and treat the vapors can be avoided as well as emissions to the environment.

In comparison to compositions that cure by radical polymerization, compositions that cure by cationic polymerization advantageously exhibit a lower volume of shrinkage on curing, this contributes to a better substrate adhesion. Cationic polymerization is not inhibited by the presence of oxygen. Cyclic ether based compositions generally exhibit lower levels of odor than the (meth)acrylates radical systems.

The protective coating, i.e. the radiation cured coating obtained by curing the radiation curable composition, protects the soft coating from mechanical, chemical and corrosion actions.

The protective coating preferably has a thickness of at least 500 nm, it preferably does not exceed 100 micrometers. The thickness is preferably at least 1 micrometer and more preferably at least 2 micrometers, most preferably at least 10 micrometers. It is preferably at most 50 micrometers, more preferably at most 30 micrometers. When the thickness is too low, the effect of the protective coating in terms of mechanical, chemical and corrosion protection is less efficient. When the thickness is too high, the thermal degradation of the protective coating upon heat treatment may be incomplete leaving residues on the soft coating and the amount of degradation products may lead to the soiling of the furnace. Residues present on the soft coating will negatively impact its optical, energy or thermal properties.

The protective coating may be provided in a single layer or in several layers having the same or a different composition. If the compositions of different layers are different, each of them still falls in the scope of the invention.

The protective coating may be a continuous or a non-continuous (for instance "islanded") coating. While a non-continuous coating may provide adequate protection against mechanical damage, it is less effective against humidity and chemicals protection. So, the protective coating is advantageously a continuous coating. The protective coating is hence preferably a continuous coating provided on one entire main face of the substrate bearing the soft coating.

The coated substrate of the invention bearing the protective coating is advantageous in that protective coating provides mechanical, chemical and corrosion resistance to the soft coating.

The coated substrate of the invention bearing the protective coating is advantageous in that the soft coating is protected against mechanical, chemical and corrosion actions during the production, processing, transport and storage steps, until it is provided to the end user.

The protective coating is preferably insoluble in water and resistant to hydrolysis. Protective coatings that are soluble in water or sensitive to hydrolysis provide no or a limited level of protection against corrosion and when the substrate is put in contact with water or in a humid atmosphere.

In a particular embodiment of the invention that will be described later in reference with the heat treatment, the coated substrate is advantageous in that the protective coating is removable by heat treatment and has not to be removed by dissolution in a solvent or water before said heat treatment. In this particular embodiment, the coated substrate is advantageous in that the protective coating is removable by heat treatment without damaging the properties of the soft coating such as the optical, energy or thermal properties. It has been surprisingly observed that the coated substrate according to the invention is also advantageous in that the presence of a protective coating allows reducing the heat treatment time in comparison to the same substrate bearing no protective coating. Furthermore, the application and then the thermal decomposition of the protective coating advantageously do not significantly impact the emissivity of the soft coating.

Even if not preferred, the coated substrate of the invention may optionally comprise at least one intermediate coating provided on at least a part of the face of the substrate provided with the soft coating and between the soft coating and the protective coating. So, the protective coating is above the soft coating, either in direct contact with the soft coating or separated thereof by at least one intermediate coating.

Non exhaustive examples of intermediate coatings are a polysiloxane containing coating, an enamel, a sol-gel coating.

An enamel typically comprises a glass frit, pigments and a medium. The medium is present to ensure a proper dispersion of the components. It may be a solvent, an oil, a polymer or a hardener, or any mixture of these.

When the optional at least one intermediate coating is a sol-gel coating, the sol-gel coating comprises from 0 to 1.59 wt% of cerium on the total weight of metal, metalloid and lanthanides elements of the sol-gel coating. For the sake of clarity, the amount of cerium is calculated according to the following formula:

$$\text{wt\% Ce} = \frac{\text{Weight of Ce (g)}}{\sum\limits_{i} \text{Weight of M}_i \text{ (g)}} \cdot 100$$

Wherein M is a metal, a metalloid or a lanthanide element.

The amount of cerium in the sol-gel coating is preferably from 0 to 1 wt%, more preferably from 0 to 0.5 wt% and there is most preferably no cerium in the sol-gel coating.

Even if not preferred, the present invention does also not preclude from having one or more additional coating above the protective coating, herein referred to as upper coatings. Examples of such upper coatings are a polysiloxane containing coating, an enamel, a removable protective film.

The protective coating is preferably provided above the soft coating and in direct contact with the soft coating, i.e. no intermediate coating is present between the soft coating and the protective coating.

There is preferably no upper coating above the protective coating.

It is particularly preferred that the protective coating is provided above the soft coating and in direct contact with the soft coating and that no upper coating is present above the protective coating.

In another aspect of the invention, there is provided a process for making a coated substrate said coated substrate comprising a substrate comprising two main faces separated by edges, and said process comprising the steps of:

> a) forming a soft coating on at least a part of at least one main face of the substrate,
> b) applying a radiation curable composition comprising one or more compound bearing one or more cyclic ether CEC on at least a part of said face above the soft coating,
> c) curing the radiation curable composition so as to form the protective coating,
> d) optionally forming at least one intermediate coating on at least a part of said face between the soft coating and the protective coating, and with the proviso that when the optional at least one intermediate coating is a sol-gel coating, the sol-gel coating comprises from 0 to 1.59 wt% of cerium on the total weight of metal, metalloid and lanthanide elements of the sol-gel coating.

All features and embodiments described above in relation with namely the substrate, the soft coating, the protective coating, the optional intermediate coating and upper coating apply to the process as well.

The process comprises the step of forming a soft coating. The soft coating is formed on the substrate by physical vapor deposition (PVD). It may be applied for instance by sputtering by the well-known method of magnetron sputtering.

The soft coating is formed on at least a part of at least one main face of the substrate. It can be provided on a part of said face or substantially on the entire said face. The soft coating can be provided on anyone of the main faces of the substrate or on both faces. The soft coating may be provided on anyone of the edges of the substrate or on several ones or all of them. The soft coating may also be deposited on each of the main faces of the substrate and on each of the edges of the substrate, i.e. on the entire area of the substrate. The soft coating is preferably provided substantially on one entire main face of the substrate. It has to be noted that the soft coating may be partially removed or de-coated depending on the needs. It is for instance the case for the so called edge deleted glass sheet where the soft coating is removed on the periphery of the face of the coated glass sheet. The coating removal or de-coating may also be applied on other parts of the face depending on the needs.

The process for making a coated substrate according to the invention comprises a subsequent step of applying a radiation curable composition, which is as defined supra. The radiation curable composition can be applied on the substrate by any application method known to the skilled person. Examples of application methods include but are not limited to brush coating, dip coating, slit coating, flow coating, roller coating, curtain coating, spray coating (i.e. LP pulverization, HVLP pulverization, airless pulverization or combined spraying technologies like Airmix®, DUO®,...), ultrasonic deposition, electrospray deposition, vacuum coating, flexo printing, gravure printing, lithographic printing, inkjet printing, digital printing.

The application method is preferably electrospray deposition, ultrasonic deposition or roller coating, which advantageously allow obtaining a lower thickness with a very high deposition yield (i.e. the ratio between the mass of actually deposited composition on the substrate and the mass of pulverized composition). The application method is more preferably ultrasonic deposition.

The radiation curable composition is applied on at least a part of the face of the substrate provided with the soft coating and above the soft coating. It preferably covers the entire soft coating or substantially the entire face of the substrate. The radiation curable composition can be provided on anyone of the main faces of the substrate or on both faces. The radiation curable composition may be provided on anyone of the edges of the substrate or on several ones or all of them. The radiation curable composition may also be deposited on each of the main faces of the substrate and on each of the edges of the substrate, i.e. on the entire area of the substrate. The radiation curable composition is preferably provided substantially on one entire main face of the substrate bearing the soft coating.

The constituents of the radiation curable composition and their respective amounts were detailed supra and are defined depending on the needs such as for instance the desired viscosity of the radiation curable composition for application on the substrate and the desired properties of the radiation cured coating.

The amount of radiation curable composition applied is such that the protective coating obtained after curing the radiation curable composition has a thickness of at least 500 nm, it preferably does not exceed 100 micrometers. The thickness is preferably at least 1 micrometer and more preferably at least 2 micrometers, most preferably at least 10 micrometers. It is preferably at most 50 micrometers, more preferably at most 30 micrometers. A thickness of more than 100 micrometers, alternatively of more than 50 micrometers is not cost effective, may provide more dust upon edge deletion, and may provide for undesired residues after tempering due to an incomplete removal.

The process further comprises a subsequent step of curing the radiation curable composition so as to form the protective coating. Curing is as defined supra and the curing step may comprise a drying phase when the radiation curable composition is not free of solvent and/or water. During the drying phase, the solvent and/or water is evaporated.

The radiation curable composition of the invention is preferably solvent and/or water free. In this case, the curing step advantageously does not comprise a drying phase. No energy is needed to remove the solvent and/or water, and the production line does not require devices to dry, recover and treat the vapors and emissions Cto the environment are avoided.

The curing is performed by exposure of the radiation curable composition to actinic radiations or electron beam, preferably by exposure to ultraviolet radiations or electron beam, more preferably by exposure to ultraviolet radiations. The curing time and conditions vary according to the constituents of the composition, the thickness applied and the radiation curing sources used. Curing by exposure to ultraviolet radiations typically makes use of mercury lamps, doped mercury lamps or UV-led lamps.

The protective coating is formed by the curing of the radiation curable composition. It is hence formed on at least a part of the face of the substrate provided with the soft coating and above the soft coating. It preferably covers the entire soft coating or substantially the entire face of the substrate. The protective coating can be provided on anyone of the main faces of the substrate or on both faces. The protective coating may be provided on anyone of the edges of the substrate or on several ones or all of them. The protective coating may also be deposited on each of the main faces of the substrate and on each of the edges of the substrate, i.e. on the entire area of the substrate. The protective coating is preferably provided substantially on one entire main face of the substrate bearing the soft coating.

The curing step is preferably performed directly after the step of applying the radiation curable composition.

One or more layers of protective coating may be applied, which can be of the same or of different compositions. If the compositions of different layers are different, each of them still falls in the scope of the invention.

The use of a radiation curable composition has several process advantages as already described supra. It allows a more efficient process and an improved productivity. The radiation curing technology can be installed on existing production lines as it requires few floor space. When the composition has a reduced solvent and/or water content or is even solvent and/or water free, it requires less or no energy to remove the solvent or water, and devices to dry, recover and treat the vapors can be avoided as well as emissions to the environment.

The process may comprise an optional step of forming at least one intermediate coating on at least a part of the face of the substrate provided with the soft coating between the soft coating and the protective coating.

The optional intermediate coating is as defined supra. When the optional at least one intermediate coating is a sol-gel coating, the sol-gel coating comprises from 0 to 1.59 wt% of cerium on the total weight of metal, metalloid and lanthanides elements of the sol-gel coating, preferably from 0 to 1 wt%, more preferably from 0 to 0.5 wt% and there is most preferably no cerium in the sol-gel coating.

The application and curing methods to form the intermediate coating will be adapted to the nature of the intermediate coating.

This optional step when present in the process takes place after the step of forming a soft coating and before the step of applying a radiation curable composition. It preferably takes place shortly after the step of forming a soft coating so as to provide as soon as possible a protection to the soft coating.

In the absence of this optional step, the steps of applying and curing a radiation curable composition preferably take place directly after the step of forming a soft coating so as to provide an immediate protection.

The present invention does not preclude from having an optional step of forming one or more upper coating above the soft coating. The upper coatings are as defined supra.

Again, the application and curing methods to form the upper coating will be adapted to the nature of the upper coating.

This optional step when present in the process takes place after the steps leading to the formation of the protective coating.

The process of the invention preferably does not comprise a step of forming at least one intermediate coating. The protective coating is hence preferably provided above the soft coating and in direct contact with the soft coating, i.e. no intermediate layer is present between the soft coating and the protective coating.

The process of the invention preferably does not comprise a step of forming one or more upper coating.

It is particularly preferred that the process do not comprise a step of forming at least one intermediate coating and does not comprise a step of forming one or more upper coating. The protective coating is preferably hence provided above the soft coating and in direct contact with the soft coating and no upper coating is present above the protective coating.

In a particular embodiment of the invention, the process comprises a subsequent step of applying a heat treatment to the coated substrate to form a heat treated substrate. In this embodiment, the substrate preferably can withstand the temperature ranges of the heat treatment without major alteration. The substrate is hence preferably glass, glass-ceramic, ceramic, steel, metal, it is more preferably a glass substrate, most preferably a glass sheet, which are typically intended to be heat treated. Similarly, the soft coating of this embodiment preferably is heat treatable as defined supra. Most preferably, the substrate is a glass substrate, preferably a glass sheet and the soft coating is a heat treatable soft coating.

The heat treatment of the glass may be one of those encountered in a bending (also known as curving), annealing (also known as strengthening) or tempering process. It is advantageous as more and more heat treated glass is requested in buildings and automotive applications namely for safety purposes. The heat treatment is known to the skilled person and is performed according to known methods. It generally comprises heating the glass sheet to a temperature between 300 and 800°C, preferably between 400 and 710 °C. The heat treatment may take place in air. It may last a couple of seconds to several hours. The conditions are adapted depending on the heat treatment type, the thickness and nature of the glass sheet, the type of soft coating used. The heat treatment may comprise a rapid cooling step after the heating step. It introduces stresses difference between the surface and the core of the glass so that in case of impact, the so-called tempered glass sheet will break in small pieces. If the cooling step is less strong, the glass will then simply be annealed and in any case offer a better mechanical resistance.

In this embodiment, the heat treatment is preferably a tempering where a coated glass substrate bearing a heat treatable soft coating is tempered.

The protective coating is advantageously removed by the heat treatment. It is preferably completely removed by the heat treatment. It is eliminated by thermal decomposition. Surprisingly, the process of the invention allows the removal of the protective coating by decomposition during the heat treatment without damaging the optical, energy or thermal properties conferred to the substrate by the soft coating.

In this particular case, the protective coating is thus a temporary protective coating advantageously protecting the soft coating from mechanical, chemical and corrosion actions until the substrate is heat treated.

In addition, the application and then the thermal decomposition of the protective coating advantageously do not significantly impact the emissivity of the soft coating.

It has further been surprisingly observed that the coated substrate according to the invention is also advantageous in that the presence of a protective coating allows reducing the heat treatment time in comparison to the same substrate bearing no protective coating.

Furthermore, contrarily to some products disclosed in the art, the protective coating of the invention has not to be removed by dissolution in a solvent or water before heat treatment. The process of the invention is hence also advantageous in that it allows reducing the use of solvents or water both by the use of radiation curable compositions comprising less or no solvent and/or water and by the fact that the protective coating has not to be removed by dissolution in a solvent or water before heat treatment.

If one or more of the optional intermediate and upper coatings is an organic coating, it is also eliminated by thermal decomposition during heat treatment. However, if the amount of organic material becomes too high, the thermal decomposition might be incomplete leaving residues on the soft coating and the amount of degradation products may lead to the soiling of the furnace. Residues present on the soft coating will negatively impact its optical, energy or thermal properties.

If one or more of these coatings is an inorganic coating, it remains on the substrate after heat treatment and may advantageously provide a protection of the soft coating after heat treatment.

A heat treated glass substrate obtained by the process of the invention has a particular interest in the field of glazing such as for instance laminated glazing, multiple insulating glazing units, vacuum insulating glazing. The soft coating is preferably encapsulated in the glazing, i.e. the soft coating does not face the external environment.

The present invention also provides for the use of a protective coating based on radiation curable composition comprising one or more compound bearing one or more cyclic ether CEC composition to protect a coated substrate provided with a soft coating. Said protection includes mechanical protection, chemical protection and corrosion resistance. The person skilled in the art realizes that the present invention by no means is limited to the preferred features described above. It is further noted that the invention relates to all possible combinations of features, and preferred features, described herein and recited in the claims.

The invention will now be further described by way of examples that are provided for illustrative purposes, and are not intended to limit the scope of this invention.


## EXAMPLES


## Example 1 and Comparative Example 1

The substrates used are STOPRAY VISION 40T ("V40T") glass sheets having a thickness of 6 mm commercialized by Asahi Glass Company, provided with a low emissivity temperable soft coating.

Prior to use, the glass sheets are washed with demineralized water, dried with hot air and kept away from any physical contact.

Radiation curable compositions of Example 1 and Comparative Example 1 are prepared with raw materials as listed in table 1 below, and components are intimately blended together using lab mixing device (Disperlux). Comparative Example 1 is a composition similar to Example B of US20160194516, that is, a liquid composition including (meth)acrylate compounds selected from monomers, oligomers, prepolymers or polymers including at least one (meth)acrylate function.

Table 1: content of the radiation curable compositions

| Raw Materials (g) | Nature | Comp.Ex.1 | Ex. 1 |
|---|---|---|---|
| Uvicure S105 [1] | CEC (aliphatic) | - | 79.5 |
| Uvicure S130S [1] | CEC (aliphatic) | - | 9.0 |
| UV initiator | UV initiator | 4.7 | 1.8 |
| Worléekyd RL1290 [2] | Alkyd | - | 9.0 |
| Dowsil 205 SL [3] | Additive | - | 0.5 |
| CN 9276 [4] | urethane acrylate oligomer | 38.1 | - |
| SR 351 [4] | trifunctional acrylate monomer | 28.6 | - |
| SR add833S [4] | difunctional acrylate monomer | 28.6 | - |
| 1 Lambson Ltd.; 2 Worlée GmbH; 3 Dow Chemical; 4 Sartomer. | | | |

Viscosity of the radiation curable compositions is measured at different temperatures with a Viscometer Brookfield DVII+ PRO commercialized by John MORRIS group (table 2).

The viscosity of the radiation curable composition of Comparative Example 1 is much higher than the viscosity of the radiation curable composition of Example 1, strongly impacting the application process of the composition on the substrate, hence the quality of film surface and the industrial productivity.

Table 2: Viscosity of the radiation curable compositions

| | Viscosity | |
|---|---|---|
| | (mPa.s) @21°C | (mPa.s) @40°C |
| Comp. Ex. 1 | 880 | 260 |
| Ex. 1 | 220 | 80 |

The radiation curable compositions are applied on the glass sheets on the face bearing the soft coating using a metal filmograph Baker from Elcometer company.

The applied radiation curable compositions are UV cured by exposure to a mercury lamp of 120 W/cm$^2$ at 10 m/min in an UV oven TABLE TOP U.V. CURE SYSTEM from Natgraph Ltd company. Films are tack-free after cure.

The obtained coated substrates are evaluated according to the following tests and the results are shown in tables 3 and 4.

Dry Film Thickness (DFT) is measured using a thickness gauge from Elcometer company.

Water Contact Angle (WCA) is measured according to norm ASTM D5946.

Clemen Hardness (Clemen) is measured with an Elcometer 3101 Barcol Impressor Hardness Tester from Elcometer company, and according to norm ECCA T12.

Cross-cut test is realized according to norm ISO 2409 with a Cross Hatch Cutter from Dynetechnology company, ranking from 0 (excellent) to complete delamination (5).

Emissivity value is measured with a FTIR spectrometer FRONTIER from Perkin Elmer.

Table 3: Evaluation of the samples obtained after UV curing

| Radiation curable composition applied | DFT | WCA | Clemen | Cross cut |
|---|---|---|---|---|
| | μm | ° | g | |
| Comp. Ex. 1 | 10 | 59 | 1000 | 5 |
| Comp. Ex. 1 | 20 | 60 | 1400 | 0-3 |
| Ex. 1 | 10 | 95 | >4000 | 0 |

The coated substrate according to the invention bearing the radiation curable composition of Example 1 shows a higher contact angle value than the sample bearing the radiation curable composition of Comparative Example 1. The sample according to the invention has hence a higher water repellant character what is advantageous to provide an improved corrosion resistance.

The coated substrate according to the invention shows also very good Clemen and cross-cut performances. These performances indicate that the sample according to the invention will provide good mechanical and corrosion resistance to the underlying soft coating.

Besides, it is observed that the coated substrate according to the invention has a higher hardness than the sample bearing the radiation curable composition of Comparative Example 1, even when the coating thickness of the latter is increased from 10 to 20 microns.

The coated substrate according to the invention has also a better cross cut result than the sample bearing the radiation curable composition of Comparative Example 1.

The coated substrate according to the invention is then exposed to a heat treatment in a Carbolite™ CWF Chamber Furnace, at 690°C for 15 minutes. After cooling down at room temperature, the emissivity of the heat treated substrate is not significantly impacted when compared with a reference that has not been protected with a protective coating.

It demonstrates on one hand that the application and then the thermal decomposition of the protective coating advantageously do not significantly impact the emissivity of the soft coating and on the other hand, it is an indication of the complete removal of the protective coating.

Table 4: Emissivity results

| Sample | Emissivity value |
|---|---|
| V40T un-protected (reference) - BHT | 0.020 |
| V40T un-protected (reference) - AHT | 0.015 |
| V40T with radiation curable composition of Ex.1 - BHT | 0,530 |
| V40T with radiation curable composition of Ex.1 - AHT | 0,015 |
| BHT - Before Heat Treatment; AHT - After Heat Treatment | |

## Examples 2 to 4

The procedure of Example 1 was repeated for Examples 2 to 4.

Radiation curable compositions of Examples 2 to 4 are prepared with raw materials as listed in table 5 below (including previous Example 1), and components are intimately blended together using lab mixing device (Disperlux).

Table 5: Examples 1 to 4 and results

| Raw Materials (g) | Nature | Ex.1 | Ex. 2 | Ex. 3 | Ex. 4 |
|---|---|---|---|---|---|
| Uvicure S105 [1] | CEC (aliphatic) | 79.5 | 80.0 | 76.6 | 70.6 |
| Uvicure S130S [1] | CEC aliphatic) | 9.0 | 8.9 | 8.5 | 7.8 |
| ER1010 [4] | BADGE (aromatic) | 0 | 0 | 4.3 | 11.8 |
| UV initiator | UV initiator | 1.8 | 1.8 | 1.7 | 1.6 |
| Worléekyd RL1290 [2] | Alkyd | 9.0 | 8.9 | 8.5 | 7.8 |
| Dowsil 205 SL [3] | Additive | 0.5 | 0 | 0 | 0 |
| Resiflow FL-2 [2] | Flow agent | 0 | 0.4 | 0.4 | 0.4 |
| Sum (g) | - | 99.8 | 100 | 100 | 100 |
| Ratio (arom)/(aliph) | - | 0 | 0 | 0.05 | 0.15 |
| **DFT** | - | 10 | 10 | 10 | 10 |
| **WCA** | - | 95 | 95 | 72 | 75 |
| **Clemen** | - | > 4000 | > 4000 | > 4000 | > 4000 |
| Cross cut | - | 0 | 0 | 0 | 0 |

(continued)

| Raw Materials (g) | Nature | Ex.1 | Ex. 2 | Ex. 3 | Ex. 4 |
|---|---|---|---|---|---|
| **Emissivity AHT** | - | 0.015 | 0.015 | 0.015 | 0.015 |
| NSS - 2 days | - | $\geq$ 3.5 | $\geq$ 3.5 | $\geq$ 3.5 | $\geq$ 3.5 |
| NSS - 10 days | - | < 3.5 | < 3.5 | $\geq$3.5 | $\geq$ 3.5 |
| **CC - 2 days** | - | $\geq$ 3.5 | $\geq$ 3.5 | $\geq$ 3.5 | $\geq$ 3.5 |
| **CC -10 days** | - | < 3.5 | < 3.5 | < 3.5 | $\geq$ 3.5 |
| 1 Lambson Ltd.; 2 Worlée GmbH; 3 Dow Chemical; 4 Sartomer | | | | | |

The obtained coated substrates are evaluated according to the previously described tests of Dry Film Thickness (DFT), Water Contact Angle (WCA), Clemen Hardness (Clemen), Cross-cut test, and further tests of Neutral salt spray (NSS) and Climatic chamber (CS). The emissivity value after heat treatment as described for Example 1 is also provided. The results are also shown in table 5.

- Neutral salt spray (NSS) test is realized according to ISO 9227-2012, with analysis and results according to EN 1096-2012, using an Elcometer 1120 salt spray cabinet. The samples are rated from 1 to 5, 5 being not degraded, 1 being very degraded. The limit to pass the test is a value $\geq$ 3,5.

- Climatic chamber (CC) test is realized with thermal cycles between 45°C and 55°C (heating from 45°C to 55 °C in 1 hour, cooling from 55°C to 45°C in1 hour) and a relative humidity of 98%, using a Weiss WK31000/40 climatic chamber. The substrates after treatment in the climatic chamber are rated from 1 to 5, 5 being not degraded, 1 being very degraded. The limit to pass the test is a value $\geq$ 3,5.

The composition of Example 3 differs from the composition of Example 1 in the type of flow agent used. There is no impact of such change on the resulting properties of the cured protective coating. The protective coatings obtained from the compositions of Examples 1 and 2 are satisfying the conditions of the present invention with regard to DFT, WCA, Clemen, Cross cut and emissivity tests. Additionally, the protective coatings of Examples 1 and 2 provide resistance to the neutral salt test and to the climatic chamber test for at least 2 days, with values $\geq$3.5.

The compositions of Examples 3 and 4 differ from the composition of Example 1 in that they both comprise an aromatic functional CEC, namely diglycidylether of bisphenol-A (BADGE) in an amount of 4.3 wt% and 11.8 wt% respectively. The compositions of Examples 3 and 4 are characterized by a ratio of aromatic functional CEC on aliphatic CEC of 0.05 and 0.15 respectively.

The protective coatings obtained from the compositions of Examples 3 and 4 are characterized by a lower value of water contact angle as compared to Examples 1 and 2, namely 72° and 75°, respectively. However, both still satisfy the conditions of the present invention with regard to DFT, Clemen, Cross cut and emissivity tests, thus indicating good mechanical and corrosion resistance of the underlying soft coating. Additionally, the protective coating of Example 3 provides resistance to the neutral salt test for at least 10 days and to the climatic chamber test for at least 2 days, with values >_3.5. The protective coating of Example 4 provides resistance to the neutral salt test and to the climatic chamber test for at least 10 days, with values $\geq$3.5.

According to Examples 3 and 4, the presence of the aromatic functional CEC in an amount > 3 wt% of the dry content of the composition, is also evidenced to provide the protective coating with additional resistance to water and/or moisture.

**Claims**

1. A coated substrate comprising :

   • a substrate comprising two main faces separated by edges,
   • a soft coating comprising one or more layers deposited by physical vapor deposition provided on at least a part of at least one main face of the substrate,
   • a protective coating provided on at least a part of said face above the soft coating,
   • optionally at least one intermediate coating provided on at least a part of said face between the soft coating and the protective coating,

wherein,

the protective coating is a radiation cured coating obtained by curing a radiation curable composition comprising one or more compound bearing one or more cyclic ether CEC,

and with the proviso that when the optional at least one intermediate coating is a sol-gel coating, the sol-gel coating comprises from 0 to 1.59 wt% of cerium on the total weight of metal, metalloid and lanthanide elements of the sol-gel coating.

2. Coated substrate according to claim 1 wherein, the one or more CEC comprises 2 or 3 carbon atoms in the ether cycle.

3. Coated substrate according to any of the preceding claims wherein, the one or more CEC is selected from cycloaliphatic epoxides with one or more epoxide group, compounds comprising one or more glycidyl ether group, compounds comprising one or more glycidyl ester group, oxetanes, and any mixture of these.

4. Coated substrate according to any of the preceding claims wherein, the radiation curable composition comprises at least 5 wt% of one or more CEC relative to the weight of the dry content of the composition.

5. Coated substrate according to any of the preceding claims wherein, the radiation curable composition comprises at least 3 wt% of one or more aromatic functional CEC relative to the weight of the dry content of the composition.

6. Coated substrate according to any of the preceding claims wherein, the ratio of the total amount of aromatic functional CEC to the total amount of aliphatic CEC ranges of from 0.01 to 0.60.

7. Coated substrate according to any of the preceding claims wherein, the radiation curable composition further comprises at least one polyol.

8. Coated substrate according to any of the preceding claims wherein, the radiation curable composition further comprises at least one alkyd.

9. Coated substrate according to any of the preceding claims wherein, the protective coating is insoluble in water and resistant to hydrolysis.

10. Coated substrate according to any of the preceding claims wherein, the protective coating has a thickness of at least 500 nm.

11. Coated substrate according to any of the preceding claims, wherein the substrate is a glass substrate.

12. Coated substrate according any of the preceding claims, wherein the soft coating is heat treatable.

13. Coated substrate according to any of the preceding claims, wherein the soft coating is a solar control and/or insulating low-E coating.

14. Process for making a coated substrate said coated substrate comprising a substrate comprising two main faces separated by edges, and said process comprising the steps of:

a) forming a soft coating on at least a part of at least one main face of the substrate,
b) applying a radiation curable composition comprising one or more compound bearing one or more cyclic ether CEC on at least a part of said face above the soft coating,
c) curing the radiation curable composition so as to form the protective coating,
d) optionally forming at least one intermediate coating on at least a part of said face between the soft coating and the protective coating, and with the proviso that when the optional at least one intermediate coating is a sol-gel coating, the sol-gel coating comprises from 0 to 1.59 wt% of cerium on the total weight of metal, metalloid and lanthanide elements of the sol-gel coating.

15. Process according to the preceding claim wherein, the substrate is a glass substrate and the soft coating is a heat treatable soft coating.

16. Process according to the preceding claim comprising a subsequent step of applying a heat treatment to the coated substrate to form a heat treated substrate.

17. Process according to the preceding claim wherein, the protective coating is removed by the heat treatment.

18. Use of a protective coating based on radiation curable composition comprising one or more compound bearing one or more cyclic ether CEC composition to protect a coated substrate provided with a soft coating.

**Patentansprüche**

1. Beschichtetes Substrat, umfassend:

   • ein Substrat umfassend zwei Hauptseiten, die durch Kanten getrennt sind,
   • eine weiche Beschichtung umfassend eine oder mehrere durch physikalische Gasphasenabscheidung abgeschiedene Schichten auf wenigstens einem Teil wenigstens einer Hauptseite des Substrats bereitgestellt,
   • eine Schutzbeschichtung auf wenigstens einem Teil der Seite über der weichen Beschichtung bereitgestellt,
   • gegebenenfalls wenigstens eine Zwischenbeschichtung auf wenigstens einem Teil der Seite zwischen der weichen Beschichtung und der Schutzbeschichtung bereitgestellt,

   wobei

   die Schutzbeschichtung eine strahlungsgehärtete Beschichtung ist, erhalten durch Härten einer strahlungshärtbaren Zusammensetzung umfassend eine oder mehrere Verbindungen, die einen oder mehrere cyclische Ether tragen, CEC,
   und mit der Maßgabe, dass wenn die optionale wenigstens eine Zwischenbeschichtung eine Sol-Gel-Beschichtung ist, die Sol-Gel-Beschichtung von 0 bis 1,59 Gew.-% Cer bezogen auf das Gesamtgewicht von Metall-, Metalloid- und Lanthanidelementen der Sol-Gel-Beschichtung umfasst.

2. Beschichtetes Substrat gemäß Anspruch 1, wobei die eine oder mehreren CEC 2 oder 3 Kohlenstoffatome in dem Ethercyclus umfassen.

3. Beschichtetes Substrat gemäß einem der vorstehenden Ansprüche, wobei die eine oder mehreren CEC ausgewählt sind aus cycloaliphatischen Epoxiden mit einer oder mehreren Epoxidgruppen, Verbindungen, die eine oder mehrere Glycidylethergruppen umfassen, Verbindungen, die eine oder mehrere Glycidylestergruppen umfassen, Oxetanen und beliebigen Gemischen davon.

4. Beschichtetes Substrat gemäß einem der vorstehenden Ansprüche, wobei die strahlungshärtbare Zusammensetzung wenigstens 5 Gew.-% an einer oder mehreren CEC bezogen auf das Gewicht des Trockengehalts der Zusammensetzung umfasst.

5. Beschichtetes Substrat gemäß einem der vorstehenden Ansprüche, wobei die strahlungshärtbare Zusammensetzung wenigstens 3 Gew.-% an einer oder mehreren aromatischen funktionellen CEC bezogen auf das Gewicht des Trockengehalts der Zusammensetzung umfasst.

6. Beschichtetes Substrat gemäß einem der vorstehenden Ansprüche, wobei das Verhältnis der Gesamtmenge von aromatischen funktionellen CEC zu der Gesamtmenge von aliphatischen CEC in dem Bereich von 0,01 bis 0,60 liegt.

7. Beschichtetes Substrat gemäß einem der vorstehenden Ansprüche, wobei die strahlungshärtbare Zusammensetzung ferner wenigstens ein Polyol umfasst.

8. Beschichtetes Substrat gemäß einem der vorstehenden Ansprüche, wobei die strahlungshärtbare Zusammensetzung ferner wenigstens ein Alkyd umfasst.

9. Beschichtetes Substrat gemäß einem der vorstehenden Ansprüche, wobei die Schutzbeschichtung in Wasser unlöslich und gegen Hydrolyse beständig ist.

10. Beschichtetes Substrat gemäß einem der vorstehenden Ansprüche, wobei die Schutzbeschichtung eine Dicke von wenigstens 500 nm aufweist.

**11.** Beschichtetes Substrat gemäß einem der vorstehenden Ansprüche, wobei das Substrat ein Glassubstrat ist.

**12.** Beschichtetes Substrat gemäß einem der vorstehenden Ansprüche, wobei die weiche Beschichtung wärmebehandelbar ist.

**13.** Beschichtetes Substrat gemäß einem der vorstehenden Ansprüche, wobei die weiche Beschichtung eine Sonnenschutz- und/oder isolierende Low-E-Beschichtung ist.

**14.** Verfahren zur Herstellung eines beschichteten Substrats, wobei das beschichtete Substrat ein Substrat umfasst, das zwei Hauptseiten umfasst, die durch Kanten getrennt sind, und das Verfahren die Schritte umfasst:

a) Bilden einer weichen Beschichtung auf wenigstens einem Teil wenigstens einer Hauptseite des Substrats,
b) Aufbringen einer strahlungshärtbaren Zusammensetzung umfassend eine oder mehrere Verbindungen, die einen oder mehrere cyclische Ether tragen, CEC, auf wenigstens einen Teil der Seite über der weichen Beschichtung,
c) Härten der strahlungshärtbaren Zusammensetzung, um die Schutzbeschichtung zu bilden,
d) gegebenenfalls Bilden wenigstens einer Zwischenbeschichtung auf wenigstens einem Teil der Seite zwischen der weichen Beschichtung und der Schutzbeschichtung, und mit der Maßgabe, dass wenn die optionale wenigstens eine Zwischenbeschichtung eine Sol-Gel-Beschichtung ist, die Sol-Gel-Beschichtung von 0 bis 1,59 Gew.-% Cer bezogen auf das Gesamtgewicht von Metall-, Metalloid- und Lanthanidelementen der Sol-Gel-Beschichtung umfasst.

**15.** Verfahren gemäß dem vorstehenden Anspruch, wobei das Substrat ein Glassubstrat ist und die weiche Beschichtung eine wärmebehandelbare weiche Beschichtung ist.

**16.** Verfahren gemäß dem vorstehenden Anspruch, umfassend einen nachfolgenden Schritt der Anwendung einer Wärmebehandlung des beschichteten Substrats, um ein wärmebehandeltes Substrat zu bilden.

**17.** Verfahren gemäß dem vorstehenden Anspruch, wobei die Schutzbeschichtung durch die Wärmebehandlung entfernt wird.

**18.** Verwendung einer Schutzbeschichtung auf Grundlage einer strahlungshärtbaren Zusammensetzung umfassend eine oder mehrere Verbindungen, die einen oder mehrere cyclische Ether tragen, CEC, zum Schützen eines beschichteten Substrats, das mit einer weichen Beschichtung versehen ist.


**Revendications**

**1.** Substrat revêtu comprenant :

• un substrat comprenant deux faces principales séparées par des bords,
• un revêtement souple comprenant une ou plusieurs couches déposées par dépôt physique en phase vapeur sur au moins une partie d'au moins une phase principale du substrat,
• un revêtement protecteur fourni sur au moins une partie de ladite face au-dessus du revêtement souple,
• éventuellement au moins un revêtement intermédiaire fourni sur au moins une partie de ladite face entre le revêtement souple et le revêtement protecteur,
le revêtement protecteur étant un revêtement durci par un rayonnement obtenu par durcissement d'une composition durcissable par un rayonnement comprenant un ou plusieurs composés portant un ou plusieurs éthers cycliques CEC,
et à la condition que lorsque l'au moins un revêtement intermédiaire éventuel est un revêtement sol-gel, le revêtement sol-gel comprend de 0 à 1,59 % en poids de cérium sur le poids total des éléments métalliques, métalloïdes et de lanthanide du revêtement sol-gel.

**2.** Substrat revêtu selon la revendication 1, le ou les CEC comprenant 2 ou 3 atomes de carbone dans le cycle éther.

**3.** Substrat revêtu selon l'une quelconque des revendications précédentes, le ou les CEC étant choisis parmi des époxydes cycloaliphatiques comprenant un ou plusieurs groupes époxyde, des composés comprenant un ou plusieurs groupes éther de glycidyle, des composés comprenant un ou plusieurs groupes ester, des oxétanes et un quelconque mélange de ceux-ci.

4. Substrat revêtu selon l'une quelconque des revendications précédentes, la composition durcissable par un rayonnement comprenant au moins 5 % en poids d'un ou plusieurs CEC par rapport au poids de la teneur sèche de la composition.

5. Substrat revêtu selon l'une quelconque des revendications précédentes, la composition durcissable par un rayonnement comprenant au moins 3 % en poids d'un ou plusieurs CEC fonctionnels aromatiques par rapport au poids de la teneur sèche de la composition.

6. Substrat revêtu selon l'une quelconque des revendications précédentes, le rapport de la quantité totale de CEC fonctionnel aromatique sur la quantité totale de CEC aliphatique se situant dans la plage allant de 0,01 à 0,60.

7. Substrat revêtu selon l'une quelconque des revendications précédentes, la composition durcissable par un rayonnement comprenant en outre au moins un polyol.

8. Substrat revêtu selon l'une quelconque des revendications précédentes, la composition durcissable par un rayonnement comprenant en outre au moins un alkyde.

9. Substrat revêtu selon l'une quelconque des revendications précédentes, le revêtement protecteur étant insoluble dans l'eau et résistant à une hydrolyse.

10. Substrat revêtu selon l'une quelconque des revendications précédentes, le revêtement protecteur ayant une épaisseur d'au moins 500 nm.

11. Substrat revêtu selon l'une quelconque des revendications précédentes, le substrat étant un substrat de verre.

12. Substrat revêtu selon l'une quelconque des revendications précédentes, le revêtement souple pouvant être traité thermiquement.

13. Substrat revêtu selon l'une quelconque des revendications précédentes, le revêtement souple étant un revêtement de contrôle solaire et/ou isolant à faible émissivité.

14. Procédé pour la préparation d'un substrat revêtu, ledit substrat revêtu comprenant un substrat comprenant deux faces séparées par des bords, et ledit procédé comprenant les étapes de :

   a) formation d'un revêtement souple sur au moins une partie d'au moins une phase principale du substrat,
   b) application d'une composition durcissable par un rayonnement comprenant un ou plusieurs composés portant un ou plusieurs éthers cycliques CEC sur au moins une partie de ladite face au-dessus du revêtement souple,
   c) durcissement de la composition durcissable par un rayonnement de sorte à former le revêtement protecteur,
   d) éventuellement formation d'au moins un revêtement intermédiaire sur au moins une partie de ladite face entre le revêtement souple et le revêtement protecteur, et à la condition que lorsque l'au moins un revêtement intermédiaire éventuel est un revêtement sol-gel, le revêtement sol-gel comprend de 0 à 1,59 % en poids de cérium sur le poids total des éléments métalliques, métalloïdes et de lanthanide du revêtement sol-gel.

15. Procédé selon la revendication précédente, le substrat étant un substrat de verre et le revêtement souple étant un revêtement souple pouvant être traité thermiquement.

16. Procédé selon la revendication précédente comprenant une étape subséquente d'application d'un traitement thermique sur le substrat revêtu pour former un substrat traité thermiquement.

17. Procédé selon la revendication précédente, le revêtement protecteur étant éliminé par le traitement thermique.

18. Utilisation d'un revêtement protecteur basé sur une composition durcissable par un rayonnement comprenant un ou plusieurs composés portant une ou plusieurs compositions d'éther cyclique CEC pour protéger un substrat revêtu pourvu d'un revêtement souple.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0050354 A
- WO 0102496 A
- US 20180355659 A1
- US 20060065350 A1
- US 20160194516 A
- EP 0262414 A
- WO 2005012200 A
- WO 2006122900 A
- WO 2007138097 A
- WO 2011147875 A
- WO 2011147864 A
- WO 2013079400 A
- WO 2014191472 A
- WO 2014191474 A
- WO 2014191484 A